# EUROPEAN PATENT SPECIFICATION

(11) **EP 1 147 936 B1**
(45) Date of publication and mention of the grant of the patent: **19.01.2011**
(21) Application number: 01201380.1
(22) Date of filing: 13.04.2001
(51) Int. Cl.: B60K 25/00, A01B 71/06

(54) **Method for controlling the power take-off shaft drive mechanism of a utility vehicle**
Verfahren zur Steuerung des Zapfwellenantriebs eines Nutzfahrzeugs
Méthode de commande du mécanisme d'entrâinement de prise de force d'un véhicule utilitaire

(30) Priority: 20.04.2000 AT 3072000 U
(43) Date of publication of application: 24.10.2001
(73) Proprietor: CNH Österreich GmbH, 4300 St. Valentin (AT)
(72) Inventor: Hrazdera, Oliver, 4470 Enns (AT)
(74) Representative: CNH IP Department

(56) References cited:
- EP-A- 0 677 415
- WO-A-99/44854
- DE-A1- 4 219 050
- US-A- 4 289 222
- US-A- 4 372 265
- US-A- 5 611 751
- PATENT ABSTRACTS OF JAPAN vol. 009, no. 077 (M-369), 6 April 1985 (1985-04-06) & JP 59 206649 A (YANMAR NOKI KK), 22 November 1984 (1984-11-22)

## Description

The invention relates to a method for controlling the drive mechanism of a utility vehicle having a power take-off shaft (PTO), said driving mechanism comprising an engine, a transmission, a power take-off clutch and a controller. Although in this connection, especially tractors or self-propelled agricultural machines are taken into consideration, the present invention is also applicable to municipal utility machines and self-propelled construction machinery.

In use as a utility machine, wherein the implement pulled or mounted by means of a power lift device is driven by the PTO shaft, the engine speed has to be adjusted such that the required power is available at the take-off shaft and that the take-off shaft rotates with the appropriate rotational speed ("standard rotational speed") or a rotational speed as close as possible thereto. Conventionally, the engine speed, and thereby also the rotational speed of the take-off shaft, taking into account the gear used in the PTO gear box, is adjusted by means of a hand throttle lever.

In operation, the rotational speed of the power take-off shaft should not vary to a large extent since for instance with implements for applying seed or fertilizer, the application density has to be kept constant. On disengaging the power take-off shaft clutch, the rotational speed of the engine stays increased or even increases further, respectively, unless there is a counter action by the operator, for instance by moving back the hand throttle lever. The above is true for vehicles both with discontinuously or continuously variable transmissions.

A driving mechanism as set out above is known from DE-A-4.001.389. With this drive mechanism, there is a controlling connection between the engine and the power take-off shaft clutch as far as this clutch is disengaged if the rotational speed of the engine decreases too far or if a hydraulic power lift device reaches a certain height. When the end of a furrow is reached during field work and the power take-off shaft clutch is disengaged, the manual throttle lever has to be moved back to avoid annoying noises and a high fuel consumption; with vehicles having a discontinuously variable transmission, this is additionally required to reduce the travelling speed for the turning maneuver. The automatic disengagement of the power take-off shaft clutch on lifting the power lift device is known and possible but critical with respect to the operational safety. Even this however cannot prevent that the rotational speed of the engine is not reduced or is reduced too late. As a consequence, the universally jointed shaft connected to the power take-off shaft rotates with high speed in the lifted position with acute angled universal joints. This increases the wear thereof and could even result in the destruction thereof on fast lift-up, especially in view of the fact that with a hydraulic pump with constant displacement and high rotational speed of the engine, the lift speed may be quite high.

US-4,289,222 describes a method of controlling a driving mechanism according to the preamble of claim 1. According to this known method, an engine-clutch control system for a ship bow thruster controls the sequence of operations of an engine and clutch. The system operates by monitoring the engine speed and clutch status and provides a specific logic for ensuring that each operation takes place only if certain conditions exist. The clutch can only be engaged or disengaged when the engine is running below the nominal idle speed. However, this system is only a monitoring system and simple prevents the clutch from engaging or disengaging at a wrong moment.

JP 59 206649 shows an agricultural machine equipped with a sensor which disconnects a clutch when the implement is raised above ground level. No consideration is given to the speed of the engine when clutch is engaged or disengaged. This could damage the clutch when engaged or disengaged at a too high engine speed.

GB-2,267,685 discloses an operator interface for a consolidated control of the engine of a vehicle. An engine control device is foreseen to detect the actual value of the engine speed and compare it with the set value by the driver. When the actual speed and the set speed differ, an engine control device will change the fuel supply to the engine. No control is foreseen to assure that the engine speed is sufficiently low before engagement or disengagement of the clutch.

It is therefore the object of the invention to avoid these disadvantages and to ensure a careful and economical operation of the vehicle.

This object is obtained by the following method features:
a) on issuing the instruction for engagement of the power take-off shaft clutch at a low rotational speed of the engine, engaging the power take-off shaft clutch, or automatically reducing the rotational speed of the engine before engagement of the power take-off shaft clutch, respectively;
b) when the power take-off shaft clutch is completely engaged, automatically increasing the rotational speed of the engine by the controller up to reaching the rotational speed of the engine required for the nominal speed of rotation of the power take-off shaft; and
c) on disengaging the power take-off shaft clutch again, automatically decreasing the rotational speed of the engine.
The improvement being that on switching-on of a hydraulic load, the rotational speed of the engine is automatically increased and is decreased on switching-off, the hydraulic load being connected to a bus system of the utility vehicle and being fed by a pump driven by the engine; and the hydraulic load reports its requirements via the bus system and thereby triggers the increase of the rotational speed of the engine by the required amount, and further reports failures thereby effecting a reduction of the rotational speed of the engine.

In view of a), the power take-off shaft clutch may be engaged with very little wear and without much load for the driven implement ("soft start up"). The reduced speed of rotation of the engine is just high enough to avoid stalling of the engine on starting up the implement with a corresponding temporally controlled engagement of the power take-off shaft clutch. If the rotational speed of the engine is too high at the time of issuing the command, it is reduced beforehand.

In accordance with b), the rotational speed of the engine and thereby the speed of the power take-off shaft is automatically increased to the correct value which per se results in facilitating the operation. This will take place without any frictional losses within the power take-off shaft clutch. The increase of the rotational speed of the engine further may be optimized by predetermining a temporal function (claim 7). By the same token, the correct travelling speed in this manner is adjusted when operating a discontinuously variable transmission; with a continuously variable transmission, the operator may direct his full attention to the adjustment of the correct travelling speed.

In accordance with c), the rotational speed of the engine is automatically reduced on disengaging the power take-off shaft clutch. In this manner, it is ensured that this reduction indeed occurs, and that it occurs in due time and with the required amount. On the other hand, the deceleration time of the take-off shaft is shortened and the risk of damages is reduced.

In a preferred embodiment, on issuing the instruction to disengage the power take-off shaft clutch, first the rotational speed of the engine is automatically reduced, and only then the power take-off shaft clutch is disengaged (claim 2). In this manner, the deceleration time of the power take-off shaft is even shorter, thereby increasing the longevity and reliability. With a vehicle having a discontinuously variable transmission, the desired speed reduction also as such is obtained in due time before turning at the headlands.

If the utility vehicle has a power lift device for an implement driven by the power take-off shaft, an advantageous effect of the invention consists in the fact that in an automatic mode of the control, on issuing the instruction for lifting the power lift device, the power take-off shaft clutch is disengaged and the rotational speed of the engine is reduced, and on lowering the lift device again, the steps according to 1.a) and 1.b) are taken (claim 3). In this matter, firstly the convenience of the operation is increased since with only one instruction a plurality of control actions is initiated. And secondly, in view of the lower rotational speed of the engine and therefore of the oil pump feeding the power lift device, the lift-up of the power lift device is performed in a slower manner. Since the lift-up speed is not controllable with all conventional power lift device controllers, this is a twofold advantage.

With an even more advantageous embodiment, in an automatic mode of control, on issuing of the instruction to lift up the power lift device, as a first step the rotational speed of the engine is automatically reduced, whereupon the power take-off shaft clutch is disengaged, and only then the power lift device is lifted up. On lowering again of the power lift device, the steps according to 1.a) and 1.b) are taken (claim 4). In addition to the advantages of the preceding paragraph, this results in the fact that on lifting the power lift device, the rotational speed of the power take-off shaft already will have been reduced sufficiently to ensure that there is no risk of damaging the universally jointed shaft on lifting up. The deceleration time is even shorter in view of the preceding reduction of the rotational speed.

If the transmission is of a kind having a continuously variable transmission ratio, an additional advantage is obtained by the fact that on operation with engaged power take-off shaft clutch, the rotational speed of the engine is kept constant and the travelling speed is only controlled by the transmission ratio of the transmission (claim 5). In this manner, with a constant rotational speed of the power take-off shaft, the travelling speed may be adapted to the requirements.

In an advantageous embodiment wherein the hydraulic load is fed by a hydraulic pump with constant displacement driven by the engine, a pressure sensor provided at the pump will issue the signal for increasing the rotational speed of the engine (claim 6). In this manner, short and simple instruction paths are obtained since the pump is mounted to the engine.

The invention will now be described in greater detail, by way of example, with reference to the accompanying drawings, in which:
Figure 1 shows a tractor with control in a schematic manner;
Figure 2 shows a flow diagram of the switching-on procedure in a normal mode;
Figure 3 shows a flow diagram of the switching-off procedure in a normal mode;
Figure 4 shows a flow diagram of the switching-on procedure in the automatic mode; and
Figure 5 shows a flow diagram of the switching-off procedure in the automatic mode.

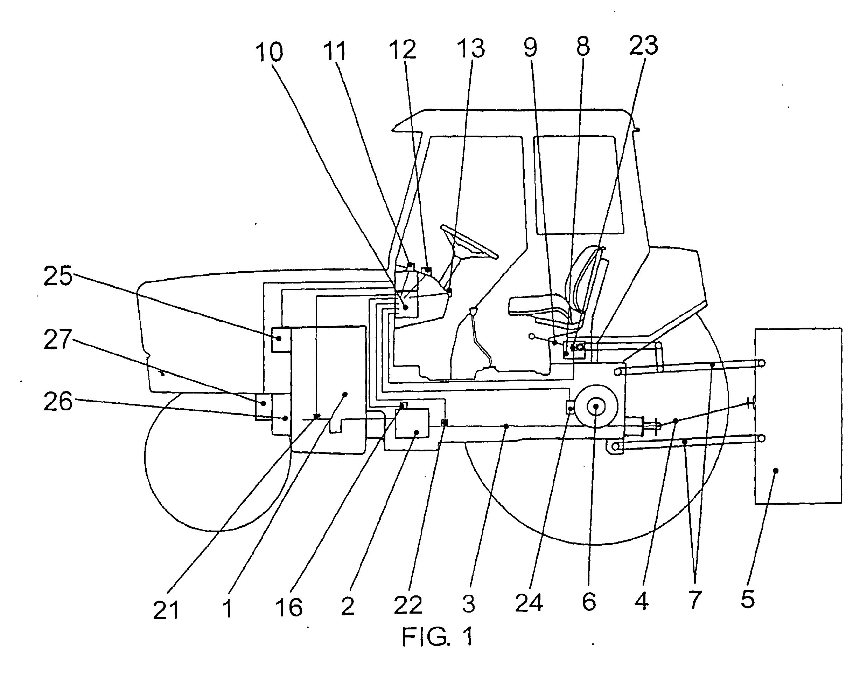

In Figure 1, the engine is only schematically shown and designated with 1. The engine is followed by a power take-off shaft clutch 2, possibly followed by a discontinuously variable transmission (not shown) for selecting the power take-off shaft speed (540, 750, 1000 or 1400 RPM). The power take-off shaft clutch 2 is a hydraulically operated clutch of any type, for instance a dry or wet clutch, with one or more disks. From this clutch, a take-off shaft 3 leads to the universally jointed shaft 4 of an implement 5 driven thereby. The rear axle 6 of the tractor is only schematically shown. The tractor further has a power lift device 7 moved by a hydraulic system 8 which is controlled by a power lift device lever 9 near the operators seat. With the embodiment shown, the power lift device and the take-off shaft are disposed at the rear side of the tractor, but they also might be disposed at the front of the tractor.

A controller 10 is disposed at a suitable location within the tractor. It includes a processor repeatingly performing the method according to the invention by means of a control program, and it is connected via wires which are only schematically shown to the operating elements and sensors listed below:
- a switch 11 for switching on the power take-off shaft, preferably a momentary contact switch; in the automatic mode, this switch further may act on the power lift device;
- a switch 12 for switching on the automatic mode, preferably with two positions;
- a switch 13 for switching off the power take-off shaft, which is also a momentary contact switch; it could be combined with the switch 11;
- a switching valve 16 for the power take-off shaft clutch 2; this is a pulse width modulated on/of valve;
- a sensor 21 for the engine speed;
- a sensor 22 for the rotational speed of the power take-off shaft 3;
- a sensor 23 for the position of the power lift device 7;
- a sensor 24 for the rotational speed of the rear axle 6 or the travelling speed of the tractor, respectively; and
- a pressure sensor 27 reporting an additional power requirement to the controller 10.

A regulator 25, operatively connected to the controller 10, controls the rotational speed of the engine. A pump 26 with constant displacement for supplying further hydraulic loads (not shown) is disposed at the engine 1. Said pump 26 has a pressure sensor 27 which reports the switching on of the further hydraulic load fed by the pump 26. This hydraulic load must not necessarily be disposed at the vehicle itself; it may be formed by the implement itself or by a further additional device. Such a supplemental system which is not on-board of the vehicle, might be connected via a signal connector to the bus system of the vehicle.

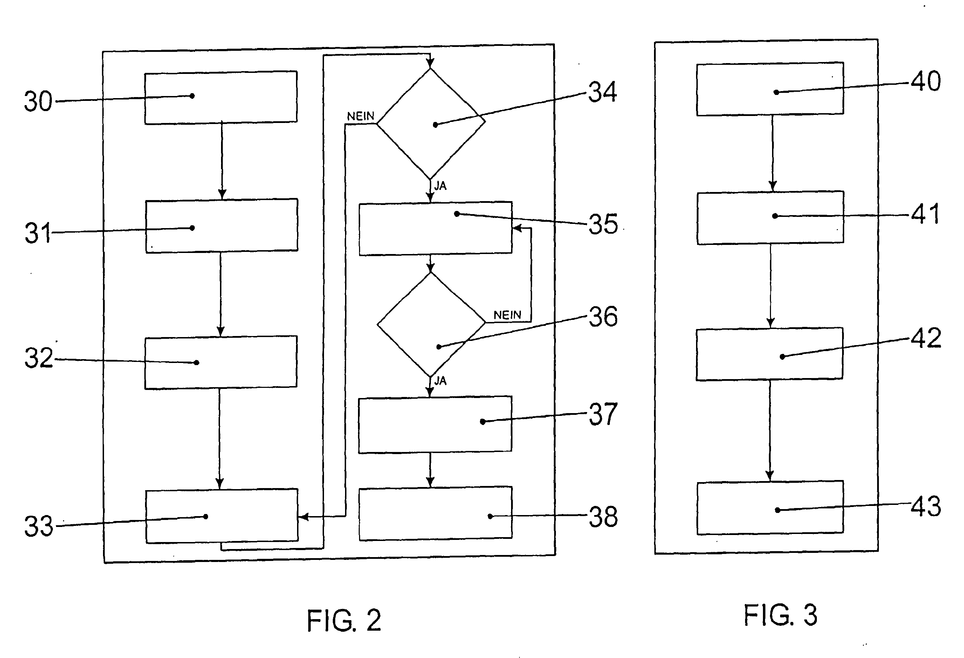

The switching-on procedure according to Figure 2 starts in the box 30, the engine 1 of the vehicle is running, the power take-off shaft clutch 2 is disengaged, and the vehicle may be in motion or also may be stationary. The operator now issues the instruction for engaging the power take-off shaft clutch 2 by pressing the momentary contact switch 11 of Figure 1 (box 31). The controller 10 recognizes this instruction and provides a command to the regulator 25 for obtaining nominal speed at which the torque of the engine is sufficient to start-up the power take-off shaft and its implement against the holding torque thereof and to accelerate it. The regulator 25 adjusts this rotational speed (box 32) which is as low as possible and just sufficient. In the practice, this means that the rotational speed is slightly increased above the idle speed, or, if the vehicle is in motion, the rotational speed of the engine is reduced. On the sensor 21 reporting to the controller 10 that this engine speed has been reached, the controller 10 effects, via the switching valve 16, a controlled engagement of the power take-off shaft clutch 2. This controlled engagement may be effected after a predetermined function or in response to operating parameters (box 33). This controlled start-up is symbolized by the decision rhombus 34. As soon as the power take-off shaft clutch 2 is engaged, for instance if the controller 10 detects that the power take-off shaft speed (sensor 22) and the engine speed (sensor 21) are equal (taking account of the transmission ratio inbetween), the controller issues the instruction to the motor regulator 25 to increase the engine speed.

This increase of the engine speed is again performed stepwise (decision rhombus 36) up to the time at which the engine speed required for the standard speed of the power take-off shaft is reached (box 35). This increase of the rotational speed also may take place according to a predetermined function. If, in the decision rhombus 36, it is detected that this rotational speed is reached, the start-up procedure is completed (box 37). In most cases, the operator only by now will start moving the vehicle (box 38). On the other hand, the beginning of vehicle movement may start earlier or the complete start-up procedure of the PTO may take place during the motion of the vehicle. In this case, the use of a continuously variable transmission is of special advantage.

The switching-off procedure of Figure 3 starts in the condition at which we left Figure 2. The engine rotates with the rotational speed required for the standard speed of the power take-off shaft (box 40). If the operator issues the instruction for disengagement of the power take-off shaft clutch 2 by actuating the momentary contact switch 13 (box 41), then the controller 10 will cause the disengagement of the power take-off shaft clutch 2 (box 42) and will reduce the rotational speed of the engine, preferably down to the idle speed, by acting upon the regulator 25 (box 43). Depending on the requirements and conditions, the boxes 42, 43 may be executed in reverse order or simultaneously.

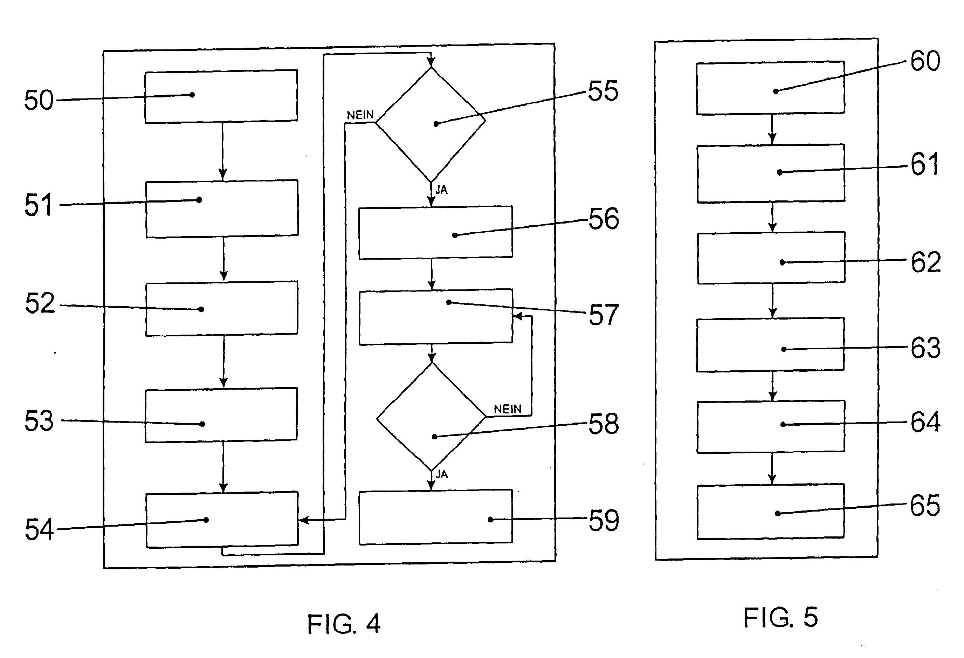

Figure 4 describes the switching-on procedure if the control of the power lift device is combined with the power take-off shaft control in an automatic mode. The automatic mode is selected with the switch 12. A possible design of this automatic mode is disclosed in AT-U-2935. Thus, it is assumed as starting condition that the engine is running, the power take-off shaft clutch 2 is disengaged, the vehicle is in motion, and the automatic mode is switched on (box 50). If the operator by now issues, for instance by actuating the lever 9 or by actuating the momentary contact switch 11, the instruction to lower the power lift device (box 51), then this instruction will not be followed immediately but the controller 10 causes the adjustment of the engine speed to the lowest required value (box 52) as described in connection with box 32 in Figure 2.

Only then the controller 10 permits the start of lowering of the power lift device (box 53). In view of the reduced rotational speed, already during the lowering motion of the lift device, the controlled start-up of the power take-off shaft may occur (box 54). This controlled engagement of the power take-off shaft clutch 2 is represented by the decision rhombus 55. On engagement of the power take-off shaft 3, generally also the power lift device 7 should have reached its lowered position (box 56). Now the engine speed is again increased to such a value which is required for the selected or standardized rotational speed of the power take-off shaft 3 (box 57). The increase of the rotational speed of the engine is again represented by the decision rhombus 58. As soon as this rotational speed is reached, the switching-on procedure is completed (box 59). Therefore, with only one instruction, both the engagement of the power take-off shaft clutch 2 as well as the lowering of the power lift device 7 are performed in a carefully coordinated manner.

The switching-off procedure of Figure 5 starts with a running engine and rotating power take-off shaft 3 in the automatic mode (box 60). This might take place in a stationary condition or at the end of a run of a field on approaching a headland. By actuating the lever 9 or, preferably with a corresponding coupling, by actuating the momentary contact switch 13, the operator issues the instruction for raising the power lift device or for performing the switching-off procedure inclusive the actuation of the power lift device (box 61), respectively. As a first step, the controller 10 issues to the motor regulator 25 the instruction to reduce the rotational speed of the engine, to about the idle speed (box 62). This will result in a reduction of the travelling speed of the vehicle, which is desired before turning. As a next step, the power take-off shaft clutch 2 will be disengaged (box 63), and finally, the power lift device is raised (box 64). The raising of the lift device may overlap in time with the disengagement of the power take-off shaft clutch, and, if the raising of the power lift device is especially slow with heavy machinery, it may start before the engine speed will be fully decreased. In any case, by now the power take-off shaft is disengaged, the power lift device is raised and the travelling speed is reduced (box 65). The vehicle now may be turned, thereby also reversing, and the next run of the field may be begun, again starting in box 50 of Figure 4.

## Claims

1. A method for controlling the drive mechanism of a utility vehicle having a power take-off shaft (3), said drive mechanism comprising an engine (1), a transmission, a power take-off shaft clutch (2) and a controller (10); said method comprises the steps of :
a) on issuing the instruction for engagement of the power take-off shaft clutch (2) at a low rotational speed of the engine, engaging the power take-off shaft clutch (2) in a controlled manner, or automatically reducing the rotational speed of the engine (1) before engagement of the power take-off shaft clutch (2), respectively;
b) when the power take-off shaft clutch (2) is completely engaged, automatically increasing the rotational speed of the engine by the controller (10) up to reaching the rotational speed of the engine required for the nominal speed of rotation of the power take-off shaft (3); and
c) on disengaging the power take-off shaft clutch (2) again, automatically decreasing the rotational speed of the engine (1) by the controller (10);
**characterized in that** on switching-on of a hydraulic load, the rotational speed of the engine (1) is automatically increased and is decreased on switching-off, the hydraulic load being connected to a bus system of the utility vehicle and being fed by a pump (26) driven by the engine; and
the hydraulic load reports its requirements via the bus system and thereby triggers the increase of the rotational speed of the engine (1) by the required amount, and further reports failures thereby effecting a reduction of the rotational speed of the engine (1).

2. A method according to claim 1, **characterized in that** it further comprises the step of :
d) on issuing the instruction for disengaging the power take-off shaft clutch (2), in a first step automatically decreasing the rotational speed of the engine (1) and only thereafter disengaging the power take-off shaft clutch (2).

3. A method according to claim 1, wherein the utility vehicle comprises a power lift device for an implement (5) driven by the power take-off shaft (3), **characterized in that**, in an automatic mode of the control, it comprises the steps of :
- on issuing the instruction for raising the power lift device, disengaging the power take-off shaft clutch (2) and decreasing the rotational speed of the engine; and
- on lowering again of the power lift device (7), performing the steps according to 1.a) and 1.b).

4. A method according to claim 2, wherein, the utility vehicle comprises a power lift device for an implement (5) driven by the power take-off shaft (3), **characterized in that**, in an automatic mode of control, it comprises the steps of :
- on issuing the instruction for raising the power lift device, first reducing the rotational speed of the engine, thereafter disengaging the power take-off shaft clutch (2) and only then raising the lift device (7); and
- on lowering the lift device again , performing the steps according to 1.a) and 1.b).

5. A method according to any of the preceding claims, wherein the transmission is a continuously variable transmission, **characterized in that** during operation with engaged power take-off shaft clutch (2), the rotational speed of the engine (1) is kept constant and the travelling speed is only controlled via the transmission ratio of the transmission.

6. A method according to any of the preceding claims, **characterized in that** the hydraulic load is fed by a pump (26) with constant displacement driven by the engine, and a pressure sensor (27) disposed at the pump (26) is triggering the signal for increasing the rotational speed of the engine.

7. A method according to any of the preceding claims, **characterized in that** the increase of the rotational speed of the engine (1) according to step 1.b) is performed according to a pre-determined temporal function.

## Patentansprüche

1. Verfahren zur Steuerung des Antriebsmechanismus eines Nutzfahrzeuges, dass eine Zapfwelle (3) aufweist, wobei der Antriebsmechanismus einen Motor (1), ein Getriebe, eine Zapfwellen-Kupplung (2) und eine Steuereinrichtung (10) umfasst; wobei das Verfahren die folgenden Schritte umfasst:
a) bei der Abgabe eines Befehls für das Einkuppeln der Zapfwellen-Kupplung (2) bei einer niedrigen Drehzahl des Motors, Einkuppeln der Zapfwellen-Kupplung (2) in gesteuerter Weise, oder automatisches Verringern der Drehzahl des Motors (1) vor dem Einkuppeln der Zapfwellen-Kupplung (2);
b) wenn die Zapfwellen-Kupplung (2) vollständig eingekuppelt ist, automatisches Vergrößern der Drehzahl des Motors durch die Steuereinrichtung (10) bis zum Erreichen der Drehzahl des Motors, die für die Nenn-Drehzahl der Zapfwelle (3) erforderlich ist; und
c) beim erneuten Auskuppeln der Zapfwellen-Kupplung (2), automatisches Verringern der Drehzahl des Motors (1) durch die Steuereinrichtung (10);
**dadurch gekennzeichnet, dass** beim Einschalten einer Hydraulik-Last die Drehzahl des Motors (1) automatisch vergrößert und beim Abschalten verringert wird, wobei die hydraulische Last mit einem Bus-System des Nutzfahrzeuges verbunden ist und durch eine von dem Motor angetriebene Pumpe (26) gespeist wird; und
die Hydraulik-Last ihren Bedarf über das Bus-System berichtet und damit die Vergrößerung der Drehzahl des Motors (1) um den erforderlichen Betrag auslöst, und weiterhin Fehler berichtet, wodurch eine Verringerung der Drehzahl des Motors (1) bewirkt wird.

2. Verfahren nach Anspruch 1, **dadurch gekennzeichnet, dass** es weiterhin den folgenden Schritt umfasst:
d) bei Abgabe des Befehls zum Auskuppeln der Zapfwellen-Kupplung (2), in einem ersten Schritt automatisches Verringern der Drehzahl des Motors (1), und lediglich nachfolgend Auskuppeln der Zapfwellen-Kupplung (2).

3. Verfahren nach Anspruch 1, bei dem das Nutzfahrzeug eine kraftgetriebene Hubeinrichtung für ein Arbeitsgerät (5) aufweist, das von der Zapfwelle (3) angetrieben wird, **dadurch gekennzeichnet, dass** in einer automatischen Steuerbetriebsart das Verfahren die folgenden Schritte umfasst:
- bei Abgabe eines Befehls zum Anheben der kraftgetriebenen Hubeinrichtung, Auskuppeln der Zapfwellen-Kupplung (2) und Verringern der Drehzahl des Motors (3); und
- beim erneuten Absenken der kraftgetriebenen Hubeinrichtung (7), Ausführen der Schritte gemäß 1.a) und 1.b).

4. Verfahren nach Anspruch 2, bei dem das Nutzfahrzeug eine kraftgetriebene Hubeinrichtung für ein Arbeitsgerät (5) aufweist, das von der Zapfwelle (3) angetrieben wird, **dadurch gekennzeichnet, dass** in einer automatischen Steuerbetriebsart das Verfahren die folgenden Schritte umfasst:
- bei Abgabe des Befehls zum Anheben der kraftgetriebenen Hubeinrichtung zunächst Verringern der Drehzahl des Motors, danach Auskuppeln der Zapfwellen-Kupplung (2), und lediglich dann nachfolgendes Anheben der Hubeinrichtung (7); und
- beim erneuten Absenken der Hubeinrichtung, Ausführen der Schritte gemäß 1.a) und 1.b).

5. Verfahren nach einem der vorhergehenden Ansprüche, bei dem das Getriebe ein kontinuierlich änderbares Getriebe ist, **dadurch gekennzeichnet, dass** während des Betriebs mit eingekuppelter Zapfwellen-Kupplung (2) die Drehzahl des Motors (1) konstant gehalten wird und die Fahrgeschwindigkeit lediglich über das Getriebe-Untersetzungsverhältnis des Getriebes gesteuert wird.

6. Verfahren nach einem der vorhergehenden Ansprüche, **dadurch gekennzeichnet, dass** die hydraulische Last durch eine von dem Motor angetriebene Pumpe (26) mit konstanter Verdrängung gespeist wird, und dass ein an der Pumpe (26) angeordneter Drucksensor (26) das Signal zur Vergrößerung der Drehzahl des Motors auslöst.

7. Verfahren nach einem der vorhergehenden Ansprüche, **dadurch gekennzeichnet, dass** die Vergrößerung der Drehzahl des Motors (1) gemäß Schritt 1.b) entsprechend einer vorgegebenen Zeitfunktion ausgeführt wird.

## Revendications

1. Procédé de commande du mécanisme d' entraînement d' un véhicule utilitaire comportant un arbre de prise de force (3), dans lequel ledit mécanisme d' entraînement comprend un moteur (1), une transmission, un embrayage d' arbre de prise de force (2) et un contrôleur (10), ledit procédé comprenant les étapes consistant à :
a) après l' envoi d' une instruction pour engager l' embrayage d' arbre de prise de force (2) à un faible régime du moteur, engager l' embrayage d' arbre de prise de force (2) d' une manière régulée ou réduire automatiquement le régime du moteur (1) avant d' engager l' embrayage d' arbre de prise de force (2),
b) lorsque l' embrayage d' arbre de prise de force (2) est complètement engagé, augmenter automatiquement le régime du moteur par le contrôleur (10) jusqu' à atteindre le régime du moteur nécessaire pour obtenir la vitesse de rotation nominale de l' arbre de prise de force (3), et
c) après un débrayage ultérieur de l' embrayage de l' arbre de prise de force (2), diminuer automatiquement le régime du moteur (1) par le contrôleur (10),
**caractérisé en ce qu'** après qu' une charge hydraulique est mise en circuit, le régime du moteur (1) est automatiquement augmenté et est diminué après sa mise hors circuit, la charge hydraulique étant connectée à un système de bus du véhicule utilitaire et étant alimentée par une pompe (26) entraînée par le moteur, et
**en ce que** la charge hydraulique indique ses exigences par l' intermédiaire du système de bus et déclenche par ce moyen l' augmentation du régime du moteur (1) de la quantité requise, et signale en outre des défaillances, en engendrant par ce moyen une réduction du régime du moteur (1).

2. Procédé selon la revendication 1, **caractérisé en ce qu'** il comprend en plus l' étape consistant à :
d) après l' envoi d' une instruction pour débrayer l' embrayage d' arbre de prise de force (2), diminuer automatiquement dans une première étape le régime du moteur (1) et débrayer seulement après cela l' embrayage d' arbre de prise de force (2).

3. Procédé selon la revendication 1, dans lequel le véhicule utilitaire comprend un dispositif de relevage pour un outil (5) entraîné par l' arbre de prise de force (3), **caractérisé en ce que**, dans un mode de commande automatique, il comprend les étapes consistant à :
- après l' envoi d' une instruction pour lever le dispositif de relevage, débrayer l' embrayage d' arbre de prise de force (2) et diminuer le régime du moteur, et
- après l' abaissement ultérieur du dispositif de relevage (7), exécuter les étapes selon 1.a) et 1.b).

4. Procédé selon la revendication 2, dans lequel le véhicule utilitaire comprend un dispositif de relevage pour un outil (5) entraîné par l' arbre de prise de force (3), **caractérisé en ce que**, dans un mode de commande automatique, il comprend les étapes consistant à :
- après l' envoi d' une instruction pour lever le dispositif de relevage, réduire d' abord le régime du moteur, puis débrayer l' embrayage d' arbre de prise de force (2) et seulement après cela, soulever le dispositif de relevage (7), et
après l' abaissement ultérieur du dispositif de relevage (7), exécuter les étapes selon 1.a) et 1.b).

5. Procédé selon l' une quelconque des revendications précédentes, dans lequel la transmission est une transmission à variation continue, **caractérisé en ce que**, pendant la marche avec l' embrayage d' arbre de prise de force (2) engagé, le régime du moteur (1) est maintenu constant et la vitesse de déplacement est commandée uniquement par le rapport de transmission du mécanisme de transmission.

6. Procédé selon l' une quelconque des revendications précédentes, **caractérisé en ce que** la charge hydraulique est alimentée par une pompe (26) à déplacement constant entraînée par le moteur, et un capteur de pression (27) disposé sur la pompe (26) déclenche le signal pour augmenter le régime du moteur.

7. Procédé selon l' une quelconque des revendications précédentes, **caractérisé en ce que** l' augmentation du régime du moteur (1) selon l' étape 1.b) est exécutée selon une fonction temporelle prédéterminée.
